# EUROPÄISCHE PATENTANMELDUNG

(11) **EP 3 527 311 A1**
(43) Veröffentlichungstag der Anmeldung: **21.08.2019**
(21) Anmeldenummer: 19156683.5
(22) Anmeldetag: 12.02.2019
(51) Int. Cl.: B23B 49/02, B25B 11/00, B23Q 11/00

(54) **SCHABLONE ZUM HERSTELLEN VON ÖFFNUNGEN IN EINER WAND**

(30) Priorität: 20.02.2018 DE 202018100936 U
(71) Anmelder: Brendel, Jörg, 72138 Kirchentellinsfurt (DE)
(72) Erfinder: Brendel, Jörg, 72138 Kirchentellinsfurt (DE)
(74) Vertreter: Kohler Schmid Möbus Patentanwälte

(57) **Zusammenfassung**

Eine Schablone (1) zum Herstellen von Öffnungen in einer Wand umfasst einen Schablonenkörper (2), der zumindest eine Durchgangsöffnung (3, 4, 5) zur Führung eines Werkzeugs aufweist, wobei der Schablonenkörper (2) an seiner Rückseite zumindest ein Saugfeld (20, 21) zur Befestigung der Schablone (1) an einer Wand aufweist, wobei der Schablonenkörper an seiner Rückseite im Bereich der Durchgangsöffnung (3, 4, 5) eine Ausnehmung (50) aufweist.

## Beschreibung

Die Erfindung betrifft eine Schablone zum Herstellen von Öffnungen in einer Wand gemäß dem Oberbegriff von Anspruch 1.

Zur Vorbereitung von Elektroinstallationen, insbesondere zur Vorbereitung der Installation einer Dose für eine Steckdose oder einen Lichtschalter ist es häufig nötig, eine Öffnung in einer Wand zu erzeugen. Dies wird in der Regel über einen Zentrierbohrer gemacht. Probleme ergeben sich insbesondere dann, wenn mehrere zueinander ausgerichtete Öffnungen erzeugt werden müssen. Zum einen ist das Anzeichnen der richtigen Bohrposition schwierig. Zum anderen ist es schwierig, mit einem Zentrierbohrer an der richtigen Stelle eine Öffnung zu erzeugen.

Aufgabe der vorliegenden Erfindung ist es deshalb, eine Schablone bereitzustellen, mit der das Einbringen von Öffnungen in Wänden erleichtert werden kann.

Gelöst wird diese Aufgabe erfindungsgemäß durch eine Schablone zum Herstellen von Öffnungen in einer Wand, mit einem Schablonenkörper der zumindest eine Durchgangsöffnung zur Führung eines Werkzeugs aufweist, wobei der Schablonenkörper an seiner Rückseite zumindest ein Saugfeld zur Befestigung der Schablone an einer Wand aufweist, wobei der Schablonenkörper an seiner Rückseite im Bereich der Durchgangsöffnung eine Ausnehmung aufweist. Mit Hilfe der Schablone ist es möglich, eine Öffnung in einer Wand, insbesondere einer Hohlwand, zu erzeugen, ohne einen Zentrierbohrer zu verwenden. Das Bohrwerkzeug kann direkt durch die Durchgangsöffnung der Schablone geführt werden. Dadurch, dass der Schablonenkörper an seiner Rückseite ein Saugfeld aufweist, kann die Schablone durch Unterdruck an der Wand gehalten werden. Somit entstehen keinerlei Schäden durch die Schablone an der Wand oder Decke, an der die Schablone eingesetzt wird. Durch das Saugfeld kann die Schablone an der Wand gehalten werden, ohne dass ein Benutzer die Schablone festhalten muss. Dadurch, dass im Bereich der Durchgangsöffnung eine Ausnehmung vorgesehen ist, liegt die Schablone im Bereich der Durchgangsöffnung nicht an der Wand, in der die Öffnung erzeugt werden soll, an. Dies erlaubt Platz für die Zähne des Bohrerwerkzeugs. Somit wird die Schablone insgesamt geschont und kann länger zum Einsatz kommen. Weiterhin kann aus dem zwischen Wand und Schablone im Bereich der Ausnehmung vorhandenen Zwischenraum Schmutz abgesaugt werden.

Besondere Vorteile ergeben sich, wenn die Schablone einen mit dem zumindest einen Saugfeld fluidisch kommunizierenden Sauganschluss aufweist. Der Sauganschluss kann dabei beispielsweise so dimensioniert sein, dass ein Industriestaubsauger angeschlossen werden kann. Dies ist ausreichend, um einen Unterdruck zu erzeugen und die Schablone an einer Wand zu halten.

Das Saugfeld kann durch eine Dichtung begrenzt werden, die von der Rückseite des Schablonenkörpers absteht. Die Dichtung ist vorzugsweise aus einem nachgiebigem Material und somit ebenfalls schonend für die Wand. Die Schablone kann an der Wand gehalten werden, ohne dass Rückstände verbleiben oder die Wand oder Decke beschädigt wird. Wenn die Schablone mit der Dichtung an die Wand angelegt wird, entsteht begrenzt durch die Dichtung ein Hohlraum zwischen der Rückseite der Schablone und der Wand. Aus diesem Hohlraum kann Luft abgesaugt werden, sodass die Schablone an der Wand haftet.

Eine besonders gute Dichtigkeit ergibt sich, wenn die Dichtung in einer Nut des Schablonenkörpers angeordnet ist.

Eine besonders gute Halterung der Schablone an einer Wand oder Decke ergibt sich, wenn zwei Saugfelder vorgesehen sind, die fluidisch mit dem Sauganschluss verbunden sind. Im Bereich des Sauganschlusses können zumindest zwei Saugöffnungen vorgesehen sein, wobei eine Saugöffnung einem Saugfeld und eine Saugöffnung der Ausnehmung zugeordnet ist. Somit kann ein Unterdruck zum Halten der Schablone erzeugt werden und gleichzeitig Schmutz abgesaugt werden. Weiterhin kann jedem Saugfeld zumindest eine Saugöffnung zugeordnet sein.

An der Schablone kann auch ein Adapter vorgesehen sein, um unterschiedliche Sauggeräte anschließen zu können. Insbesondere kann der Adapter im Bereich des Sauganschlusses vorgesehen sein.

Um die Evakuierung des Volumens zwischen der Rückseite der Schablone und der Wand zu beschleunigen, kann auf der Rückseite des Schablonenkörpers zumindest ein Luftleitkanal vorgesehen sein. Auch wird durch einen solchen Luftleitkanal das Volumen, welches evakuiert werden kann, vergrößert. Somit kann eine bessere Halterung der Schablone an der Wand bewirkt werden.

Die zumindest eine Durchgangsöffnung kann kreisrund ausgebildet sein und vorzugsweise einen Durchmesser von 68 mm aufweisen. Durch eine kreisrunde Durchgangsöffnung kann ein rotierendes Werkzeug besonders gut geführt werden. Die Durchgangsöffnung kann dabei auf die Größe des einzubringenden Lochs in der Wand abgestimmt sein.

Besondere Vorteile ergeben sich, wenn die zumindest eine Durchgangsöffnung zwei unterschiedliche Durchmesser aufweist, wobei der größere Durchmesser im der Rückseite der Schablone zugewandten Bereich vorgesehen ist. Die Innenwand der Öffnung in der Schablone kann somit gestuft ausgebildet sein.

Die Durchgangsöffnung kann sich zur Rückseite des Schablonenkörpers hin verjüngen. Dadurch entsteht eine Führung und Zentrierung des Bohrerwerkzeugs.

Weitere Vorteile ergeben sich, wenn zumindest zwei Durchgangsöffnungen vorgesehen sind, deren Mittelpunkte einen vorgegebenen Abstand aufweisen. Insbesondere können die Mittelpunkte der Durchgangsöffnungen einen Abstand von 71,5 mm aufweisen. Somit wird sichergestellt, dass die in eine Wand einzubringenden Öffnungen genau den richtigen Abstand zueinander aufweisen. Insbesondere können bei der Schablone drei oder fünf Durchgangsöffnungen vorgesehen sein. Die Schablone kann aus Kunststoff hergestellt sein.

Um die Schablone richtig ausrichten zu können und somit auch die Öffnungen richtig ausrichten zu können, ist es vorteilhaft, wenn zumindest eine Libelle vorgesehen ist. Die Libelle kann in einer Vertiefung des Schablonenkörpers angeordnet sein. In einer Vertiefung ist die Libelle geschützt angeordnet.

Vorteile ergeben sich, wenn die Vertiefung eine von der Oberfläche des Schablonenkörpers in den Schablonenkörper verlaufende Schräge aufweist. Dadurch kann die Libelle besonders gut abgelesen werden, auch wenn die Schablone sich deutlich unterhalb der Augenhöhe eines Benutzers befindet.

Alternativ kann vorgesehen sein, dass die Libelle auf den Schablonenkörper aufgesetzt ist. Dann kann die Libelle von allen Seiten gut gesehen und abgelesen werden. Die Schablone kann bis auf die Libelle(n) einstückig ausgebildet sein.

Weitere Vorteile ergeben sich, wenn zwei Libellen vorgesehen sind, die orthogonal zueinander ausgerichtet sind. Dabei können beide Libellen jeweils in einer Vertiefung vorgesehen sein. Beide Vertiefungen können eine Schräge aufweisen, die den Blick auf die jeweilige Libelle freigibt. Alternativ können beide Libellen auf den Schablonenkörper aufgesetzt sein.

Die richtige Positionierung der Schablone kann auch weiterhin dadurch vereinfacht werden, wenn eine Ausrichtmarkierung vorgesehen ist. Beispielsweise kann eine Längsachse auf der Schablone durch einen Strich markiert sein. Vorteile ergeben sich jedoch, wenn die Markierung dadurch eine Struktur ausgebildet ist. Als Struktur kommen beispielsweise Schlitze, Kerben, stegartige Erhebungen in Frage. Der Schablonenkörper kann rechteckig ausgebildet sein und die Markierungen können an den Seiten, insbesondere im Kantenbereich, des Schablonenkörpers vorgesehen sein.

Der Sauganschluss kann zu einer Reihe von Durchgangsöffnungen versetzt angeordnet sein. Insbesondere kann der Sauganschluss zu einer Mitte-Längs-Achse der Schablone versetzt angeordnet sein. Dadurch sind die Durchgangsöffnungen mit einem Bohrwerkzeug leichter zugängig und das Arbeiten wird nicht durch den Sauganschluss bzw. das daran angeschlossene Gerät beeinträchtigt.

Die Schablone kann vollständig aus Kunststoff ausgebildet sein. Insbesondere kann der Schablonenkörper vollständig aus Kunststoff und einstückig ausgebildet sein. Um dem Schablonenkörper die nötige Stabilität zu geben, können Verstärkungsrippen vorgesehen sein.

Zumindest eine Durchgangsöffnung kann eine Ausrichtmarkierung aufweisen. Die Ausrichtmarkierung ist dabei vorzugsweise nicht aufgemalt oder aufgedruckt, sondern als Struktur ausgebildet. Insbesondere kann die Ausrichtmarkierung als Kerbe, Schlitz oder dergleichen ausgebildet sein. Auch eine stegartige Erhebung als Ausrichtmarkierung ist denkbar. Insbesondere kann eine Durchgangsausnehmung vier Markierungen aufweisen. Dafür können zwei gegenüberliegende Markierungen durch eine virtuelle Linie verbunden werden, die parallel zu einer Seitenkante des Schablonenkörpers verläuft. Somit kann auch anhand der Ausrichtmarkierungen der Durchgangsöffnungen eine Ausrichtung der Schablone erfolgen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine Draufsicht auf eine erfindungsgemäße Schablone;
- Fig. 2: eine Draufsicht auf die Rückseite der erfindungsgemäßen Schablone;
- Fig. 3: eine Schnittdarstellung gemäß der Linie A-A der Figur 2;
- Fig. 4: eine Draufsicht auf eine alternative Ausführungsform einer Schablone;
- Fig. 5: eine Draufsicht auf die Rückseite der Schablone gemäß Fig. 4.

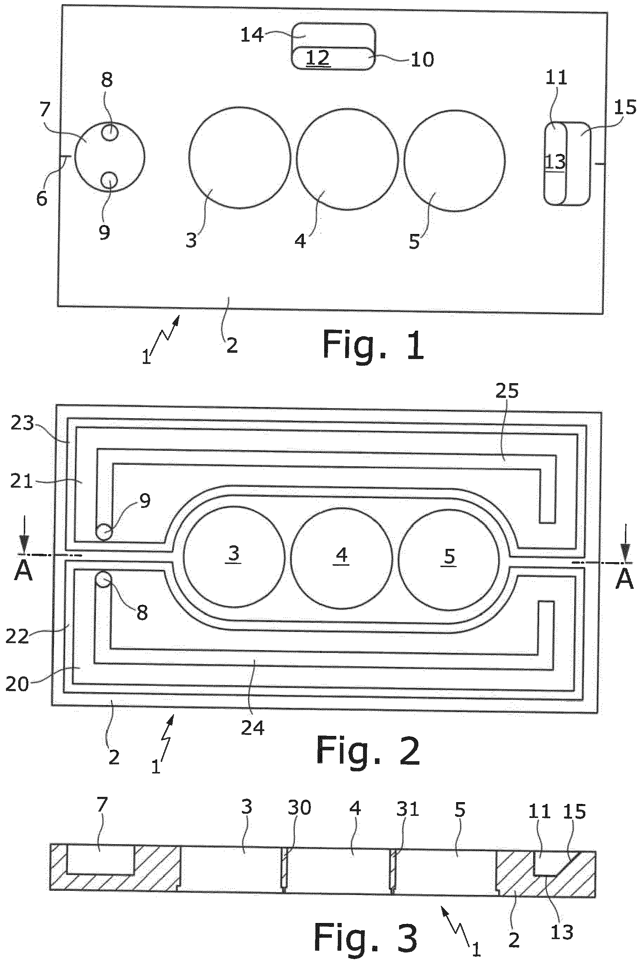

Die Figur 1 zeigt eine Schablone 1 mit einem Schablonenkörper 2. Im gezeigten Ausführungsbeispiel weist der Schablonenkörper 2 drei Durchgangsöffnungen 3, 4, 5 auf. Die Durchgangsöffnungen 3, 4, 5 sind kreisrund ausgebildet. Sie weisen einen Durchmesser von 68 mm auf. Die Mittelpunkte der Durchgangsöffnungen 3, 4, 5 weisen einen Abstand von 71,5 mm auf. Durch die Durchgangsöffnungen 3, 4, 5 hindurch können Löcher in einer Wand erzeugt werden. Die Durchgangsöffnungen 3, 4, 5 dienen daher als Führungen für ein Bohrwerkzeug. Im Bereich einer Mittellängsachse ist eine Ausrichtmarkierung 6 vorgesehen. Ein Sauganschluss 7 umfasst eine Vertiefung, in deren Grund zwei Saugöffnungen 8, 9 vorgesehen sind. Diese münden auf der Rückseite in Saugfelder, die noch näher beschreiben werden.

Weiterhin weist der Schablonenkörper 2 Vertiefungen 10, 11 auf, in denen Libellen angeordnet werden können. Dabei werden die Libellen im Bereich des jeweiligen Vertiefungsgrund 12, 13 angeordnet. Schrägen 14, 15 erstrecken sich von der Oberfläche des Schablonenkörpers 2 bis zum jeweiligen Grund 12, 13. Dadurch wird der Blick auf die Libellen freigegeben.

Die Figur 2 zeigt eine Draufsicht auf die Rückseite der Schablone 1. An der Rückseite der Schablone 1 sind Saugfelder 20, 21 vorgesehen. In die Saugfelder 20, 21 münden die Sauganschlüsse 8, 9. Die Saugfelder 20, 21 werden begrenzt durch Dichtungen 22, 23, die teilweise in Vertiefungen des Schablonenkörpers 2 angeordnet sind und über die Rückseite des Schablonenkörpers 2 vorstehen. In den Saugfeldern 20, 21 sind Luftleitkanäle 24, 25 vorgesehen, die mit den Saugöffnungen 8, 9 in Verbindung stehen. Durch die Luftleitkanäle 24, 25 wird das Absaugen von Luft begünstigt. Zu erkennen ist auch, dass sich die Dichtungen 22, 23 im Bereich der Durchgangsöffnungen 3, 4, 5 erstrecken.

Die Figur 3 zeigt eine Schnittdarstellung gemäß der Linie A-A der Figur 2. Hier ist nochmals deutlich die Schräge 15 der Vertiefung 11 zu erkennen. Außerdem ist zu erkennen, dass zwischen den Durchgangsöffnungen 3, 4, 5 Stege 30, 31 verbleiben. Die Schräge 15 weist einen Winkel von 45° zur Vertikalen auf.

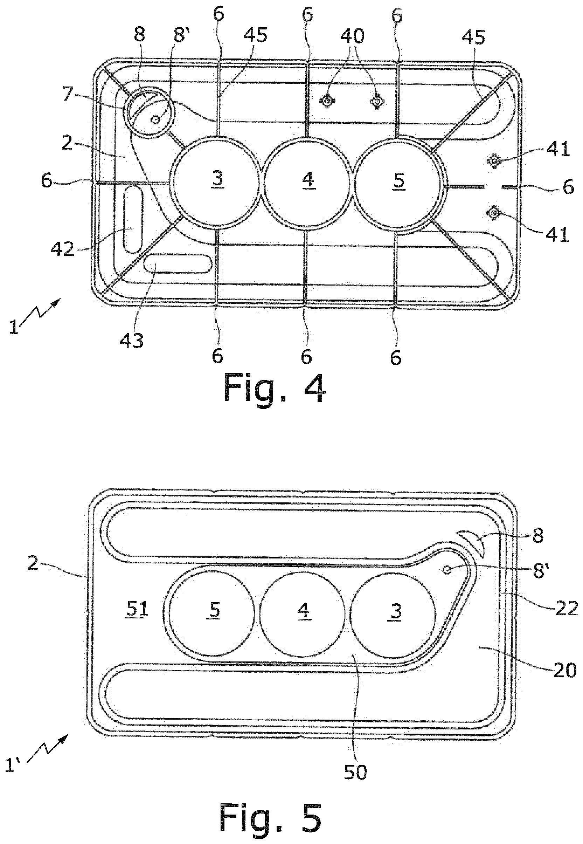

Die Figur 4 zeigt eine Draufsicht auf eine alternative Ausführungsform einer Schablone 1'. Im Folgenden werden Elemente, die denen des Ausführungsbeispiels gemäß der Figuren 1 bis 3 entsprechen, mit denselben Bezugsziffern gekennzeichnet. Die Schablone 1' weist einen Schablonenkörper 2 auf. Im gezeigten Ausführungsbeispiel weist der Schablonenkörper 2 drei Durchgangsöffnungen 3, 4, 5 auf. Die Durchgangsöffnungen 3, 4, 5 sind kreisrund ausgebildet. Sie weisen einen Durchmesser von etwa 68 mm auf. Die Mittelpunkte der Durchgangsöffnungen 3, 4, 5 weisen einen Abstand von 71,5 mm auf. Die Durchgangsöffnungen 3, 4, 5 sind leicht konisch ausgebildet, sodass sie sich zur Rückseite des Schablonenkörpers 2 hin verjüngen, um dadurch eine Führung für ein Bohrwerkzeug darzustellen. Durch die Durchgangsöffnungen 3, 4, 5 hindurch können Löcher in einer Wand erzeugt werden.

An den Seiten bzw. Kanten des Schablonenkörpers 2 sind Ausrichtmarkierungen 6 vorgesehen. Im gezeigten Ausführungsbeispiel sind die Ausrichtmarkierungen 6 als Kerben ausgebildet. Somit sind die Ausrichtmarkierungen 6 als Struktur ausgebildet. Dies hat den Vorteil, dass diese länger erhalten bleiben und nicht wie etwa eine Bedruckung abgenutzt werden kann. In einem Sauganschluss 7 ist eine Saugöffnung 8 vorgesehen. Diese mündet auf der Rückseite in ein Saugfeld, welches noch näher beschrieben wird. Eine weitere Saugöffnung 8' mündet in eine Ausnehmung an der Rückseite des Schablonenkörpers 2 im Bereich der Durchgangsöffnungen 3, 4, 5.

Der Schablonenkörper 2 weist Befestigungsöffnungen 40, 41 auf, an denen Libellen befestigt werden könnten. Im gezeigten Ausführungsbeispiel sind Libellen 42, 43 jedoch an einer anderen Stelle angeordnet. Die Libellen 42, 43 sind orthogonal zueinander ausgerichtet. Außerdem sind die Libellen 42, 43 parallel zu jeweils einer Längsseite und einer kurzen Seite des Schablonenkörpers 2 ausgerichtet.

Der Schablonenkörper 2 ist aus einem Kunststoff ausgebildet. Um Gewicht zu sparen, ist der Schablonenkörper 2 relativ dünn ausgebildet. Um die notwendige Stabilität zu gewährleisten, sind Verstärkungsrippen 45 vorgesehen.

Die Figur 5 zeigt eine Draufsicht auf die Rückseite der Schablone 1'. An der Rückseite der Schablone 1' ist ein Saugfeld 20 vorgesehen. In das Saugfeld 20 mündet der Sauganschluss 8. Das Saugfeld 20 wird durch eine Dichtung 22 begrenzt, die teilweise in einer Vertiefung des Schablonenkörpers 2 angeordnet ist. Die Dichtung 22 steht über die Rückseite 51 des Schablonenkörpers 2 vor. Dadurch ergibt sich ein Zwischenraum zwischen einer Wand, in die eine Öffnung eingebracht werden soll, und dem Schablonenkörper 2. Dieser Zwischenraum kann evakuiert werden, um durch den somit erzeugten Unterdruck die Schablone 1' an der Wand zu halten.

Die Saugöffnung 8' mündet in eine Ausnehmung 50 im Bereich der Durchgangsöffnungen 3, 4, 5. Die Ausnehmung 50 liegt etwa 5 mm tiefer als die übrige Rückseite 51 des Schablonenkörpers 2. Somit kann sichergestellt werden, dass die Durchgangsöffnungen 3, 4, 5 nicht durch das Bohrwerkzeug beschädigt werden. Außerdem kann über die Saugöffnung 8' Luft und damit Schmutz aus dem Bereich der Durchgangsöffnungen 3, 4, 5 abgesaugt werden. Dabei ist die Saugöffnung 8' mit einem kleineren Querschnitt ausgebildet als die Saugöffnung 8, um sicherzustellen, dass im Bereich des Saugfelds 20 ein Unterdruck erzeugt werden kann. Dadurch, dass beide Saugöffnungen 8, 8' in den Sauganschluss 7 münden, kann mit dem gleichen Gerät, beispielsweise einem Industriestaubsauger, sowohl der Unterdruck im Bereich des Saugfelds 20 erzeugt werden als auch Schmutz aus dem Bereich der Durchgangsöffnungen 3, 4, 5 abgesaugt werden.

Wenn keine Schmutzabsaugung gewünscht ist, kann die Saugöffnung 8' auch verschlossen werden.

## Patentansprüche

1. Schablone (1, 1') zum Herstellen von Öffnungen in einer Wand, mit einem Schablonenkörper (2), der zumindest eine Durchgangsöffnung (3, 4, 5) zur Führung eines Werkzeugs aufweist, wobei der Schablonenkörper (2) an seiner Rückseite zumindest ein Saugfeld (20, 21) zur Befestigung der Schablone (1, 1') an einer Wand aufweist, **dadurch gekennzeichnet, dass** der Schablonenkörper (2) an seiner Rückseite im Bereich der Durchgangsöffnung (3, 4, 5) eine Ausnehmung (50) aufweist.

2. Schablone nach Anspruch 1, **dadurch gekennzeichnet, dass** die Schablone (1) einen mit dem zumindest einen Saugfeld (20, 21) fluidisch kommunizierenden Sauganschluss (7) aufweist.

3. Schablone nach einem der vorhergehenden Ansprüche, **dadurch gekennzeichnet, dass** das Saugfeld (20, 21) durch eine Dichtung (22, 23) begrenzt wird, die von der Rückseite des Schablonenkörpers (2) absteht.

4. Schablone nach einem der vorhergehenden Ansprüche, **dadurch gekennzeichnet, dass** die Dichtung (22, 23) in einer Nut des Schablonenkörpers (2) angeordnet ist.

5. Schablone nach einem der vorhergehenden Ansprüche, **dadurch gekennzeichnet, dass** im Bereich des Sauganschlusses (7) zumindest zwei Saugöffnungen (8, 8', 9) vorgesehen sind, wobei eine Saugöffnung (8, 9) einem Saugfeld (20, 21) und eine Saugöffnung (8') der Ausnehmung (50) zugeordnet ist.

6. Schablone nach einem der vorhergehenden Ansprüche, **dadurch gekennzeichnet, dass** auf der Rückseite des Schablonenkörpers (2) zumindest ein Luftleitkanal (24, 25) vorgesehen ist.

7. Schablone nach einem der vorhergehenden Ansprüche, **dadurch gekennzeichnet, dass** die zumindest eine Durchgangsöffnung (3, 4, 5) kreisrund ausgebildet ist und vorzugsweise einen Durchmesser von 68 mm aufweist.

8. Schablone nach einem der vorhergehenden Ansprüche, **dadurch gekennzeichnet, dass** sich die Durchgangsöffnung (3, 4, 5) zur Rückseite des Schablonenkörpers (2) hin verjüngt.

9. Schablone nach einem der vorhergehenden Ansprüche, **dadurch gekennzeichnet, dass** zumindest zwei Durchgangsöffnungen (3, 4, 5) vorgesehen sind, deren Mittelpunkte einen vorgegebenen Abstand aufweisen, insbesondere 71,5 mm.

10. Schablone nach einem der vorhergehenden Ansprüche, **dadurch gekennzeichnet, dass** zumindest eine Libelle (42, 43) vorgesehen ist.

11. Schablone nach einem der vorhergehenden Ansprüche, **dadurch gekennzeichnet, dass** der Sauganschluss (7) zu einer Reihe von Durchgangsöffnungen (3, 4, 5) versetzt angeordnet ist.

12. Schablone nach einem der vorhergehenden Ansprüche, **dadurch gekennzeichnet, dass** zwei Libellen (42, 43) vorgesehen sind, die orthogonal zueinander ausgerichtet sind.

13. Schablone nach einem der vorhergehenden Ansprüche, **dadurch gekennzeichnet, dass** eine Ausrichtmarkierung (6), insbesondere in Form einer Struktur, vorgesehen ist.

14. Schablone nach einem der vorhergehenden Ansprüche, **dadurch gekennzeichnet, dass** sie Verstärkungsrippen (45) aufweist.

15. Schablone nach einem der vorhergehenden Ansprüche, **dadurch gekennzeichnet, dass** zumindest eine Durchgangsöffnung (3, 4, 5) eine Ausrichtmarkierung aufweist.
